# EUROPEAN PATENT APPLICATION

(11) **EP 4 604 675 A2**
(43) Date of publication of application: **20.08.2025**
(21) Application number: 25158000.7
(22) Date of filing: 14.02.2025
(51) Int. Cl.: H05B 3/36, H05B 3/14

(54) **CARBON NANOTUBE CONSOLIDATED IN SILICONE FOR RESISTIVE HEATING SYSTEM**

(30) Priority: 15.02.2024 IN 202441010471; 15.04.2024 US 202418635243
(71) Applicant: Goodrich Corporation, Charlotte, NC 28217-4578 (US)
(72) Inventor: ANNAMALAI, Anusha, 635126 Hosur (IN)
(74) Representative: Dehns

(57) **Abstract**

A resistive heating system is provided. The resistive heating system includes a first silicone rubber sheet (202), a carbon nanotube (CNT) yarn (206) where the CNT yarn is configured to be embedded in a first side of the first silicone rubber sheet, a set of conductive wire leads (208) where each of the set of conductive wire leads is configured to be coupled to opposite ends of the CNT yarn, and a second silicone rubber sheet (204). A first side of the second silicone rubber sheet is configured to be coupled to the first side of the first silicone rubber sheet thereby embedding the CNT yarn and at least a portion of the conductive wire leads between the first silicone rubber sheet and the second silicone rubber sheet.

## Description

### CROSS-REFERENCE TO RELATED APPLICATIONS

This application claims priority to, and the benefit of, India Provisional Patent Application No. 202441010471, filed February 15, 2024 and titled "CARBON NANOTUBE CONSOLIDATED IN SILICONE FOR RESISTIVE HEATING SYSTEM."

### FIELD

The present disclosure generally relates to resistive heating systems and more specifically to a resistive heating systems with a carbon nanotube consolidated in silicone.

### BACKGROUND

Carbon nanotubes (CNT) are cylindrical nanostructures composed of carbon atoms. CNT yarn is a material formed by spinning of CNT into threads. Being an allotrope of carbon, CNTs exhibit excellent electrical, thermal, and mechanical properties. Having superior properties and light weight, CNTs have a wide range of applications including in the aerospace industry.

### SUMMARY

A resistive heating system is disclosed herein. The resistive heating system includes a first silicone rubber sheet, a carbon nanotube (CNT) yarn where the CNT yarn is configured to be embedded in a first side of the first silicone rubber sheet, a set of conductive wire leads where each of the set of conductive wire leads is configured to be coupled to opposite ends of the CNT yarn, and a second silicone rubber sheet, where a first side of the second silicone rubber sheet is configured to be coupled to the first side of the first silicone rubber sheet thereby embedding the CNT yarn and at least a portion of the conductive wire leads between the first silicone rubber sheet and the second silicone rubber sheet.

In various embodiments, both the first silicone rubber sheet and the second silicone rubber sheet are reinforced with fiberglass. In various embodiments, each of the set of conductive wire leads is configured to be coupled to the opposite ends of the CNT yarn via a coupling device. In various embodiments, the coupling device is at least one of a butt splice, spade connection, or crimp connection.

In various embodiments, responsive to the first side of the second silicone rubber sheet being coupled to the first side of the first silicone rubber sheet thereby embedding the CNT yarn and at least a portion of the conductive wire leads between the first silicone rubber sheet and the second silicone rubber sheet, the resistive heating system is cured. In various embodiments, the curing includes positioning the resistive heating system in an autoclave at a predetermined pressure, under a predetermined vacuum, at a predetermined temperature, for a predetermined time. In various embodiments, the predetermined pressure is between 3.2 bars and 4.2 bars. In various embodiments, the predetermined vacuum is between 80 KPa and 90 KPa. In various embodiments, the predetermined temperature is between 284°F (140°C) and 320°F (160°C). In various embodiments, the predetermined time is between 2 hours and 3 hours.

Also disclosed herein is a resistive heating system. The resistive heating system includes a carbon nanotube (CNT) yarn, a set of conductive wire leads where each of the set of conductive wire leads is configured to be coupled to opposite ends of the CNT yarn, and a silicone gum where the CNT yarn and at least a portion of the conductive wire leads are coated with the silicone gum.

In various embodiments, the silicone gum is applied to the CNT yarn and at least the portion of the conductive wire leads via at least one of dip coating, spray coating, spin coating, or chemical vapor deposition. In various embodiments, each of the set of conductive wire leads is configured to be coupled to the opposite ends of the CNT yarn via a coupling device. In various embodiments, the coupling device is at least one of a butt splice, spade connection, or crimp connection.

In various embodiments, responsive to the CNT yarn and at least the portion of the conductive wire leads being coated with the silicone gum, the resistive heating system is cured. In various embodiments, the curing includes positioning the resistive heating system in an autoclave at a predetermined pressure, under a predetermined vacuum, at a predetermined temperature, for a predetermined time. In various embodiments, the predetermined pressure is between 3.2 bars and 4.2 bars. In various embodiments, the predetermined vacuum is between 80 KPa and 90 KPa. In various embodiments, the predetermined temperature is between 284°F (140°C) and 320°F (160°C). In various embodiments, the predetermined time is between 2 hours and 3 hours.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft including a deicing assembly on the wings, in accordance with various embodiments.
FIG. 2 illustrates a cross sectional view of a resistive heating system with a carbon nanotube consolidated in silicon rubber, in accordance with various embodiments.
FIGS. 3A, 3B, 3C, and 3D illustrate a top view of a resistive heating system with a carbon nanotube consolidated in silicon rubber, in accordance with various embodiments.
FIGS. 4A, 4B, and 4C illustrate a top view of a resistive heating system with a carbon nanotube consolidated in silicone gum, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical, and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a,'' "an," or "the" may include one or more than one and that reference to an item in the singular may also include the item in the plural. Further, all ranges may include upper and lower values and all ranges and ratio limits disclosed herein may be combined.

As discussed previously, carbon nanotubes (CNT) are cylindrical nanostructures composed of carbon atoms that have a wide range of applications including in the aerospace industry. CNT yarn is a material formed by spinning of CNT into threads. Typically, CNT yarn may be utilized in various applications including supercapacitors, flexible electronics, defense systems, energy storage devices, artificial muscles, and aircraft structures, among others. The electrical conductivity, efficiency, flexibility of CNT yarn makes CNT yarn suitable for heating applications such as deicing systems, environmental warming, as well as other aircraft heating systems that are crucial in maintaining optimal system operation of an aircraft in varying temperatures. However, varying resistance in CNT yarn may leads to inconsistent thermal uniformity and power output in CNT yarn-based heating elements. The inconsistent thermal uniformity and power output may be caused by variation in electrical and thermal properties of individual CNTs, leading to uneven heat distribution. Moreover, localized temperature gradient and variations in the surrounding environment further influences heat distribution and resistance variation. In various embodiments, the resistance variation may occur due to several reasons, such as structural defects, structural changes, and interaction with a surrounding environment, among others. In that regard, strain, mechanical deformation, and environmental conditions, among other may affects the alignment and CNT configuration within CNT yarn.

Disclosed herein is a resistive heating system with a carbon nanotube consolidated in silicone. In various embodiments, consolidation is performed to improve alignment, density, and structural integrity of CNTs within the CNT yarn. In various embodiments, silicone rubber is utilized for CNT yarn consolidation. In various embodiments, a high flexibility, thermally stability, adhesion properties, ease of application, and excellent thermal conductivity makes silicone rubber suitable for CNT Yarn consolidation. In various embodiments, the utilization of silicone rubber controls the resistance fluctuations of CNT yarn that results in improved performance and expands the utility of CNT yarn. In various embodiments, in manufacturing the resistive heating system, two uncured silicone rubber sheets reinforced with fiberglass are produced. In various embodiments, the uncured silicone rubber sheets may be generated in a flat shape or in a shape that conforms to an aero surface, such as a parabolic shape of a leading edge of a wing. In various embodiments, a CNT yarn is embedded in a first side of a first uncured silicone rubber sheet of the two uncured silicone rubber sheets. In various embodiments, the CNT yarn may be routed in desired pattern on the first side of the first uncured silicone rubber sheet. Once embedded, in various embodiments, conductive wire leads are secured to both ends of the CNT yarn. In various embodiments, the conductive wire leads are secured to both ends of the CNT yarn via a coupling device, such as a butt splice, spade connection, or crimp connection, among others. In various embodiments, the conductive wire leads are then partially embedded within the first side of the first uncured silicone rubber sheet, with the conductive wire leads exiting the first uncured silicone rubber sheet for connection to a controller and/or power source controlled by a controller. In various embodiments, a first side of a second uncured silicone rubber sheet of the two uncured silicone rubber sheets is then coupled to the first side of the first uncured silicone rubber sheet such that the CNT yarn and a portion of the conductive wire leads are sandwiched between the first uncured silicone rubber sheet and the second uncured silicone rubber sheet. In various embodiments, the resistive heating system is then cured. In various embodiments, the curing may be via vulcanization. In that regard, the resistive heating system may be positioned in an autoclave to be cured. The curing may be performed at a predetermined pressure, under a predetermined vacuum or substantial vacuum, at a predetermined temperature, for a predetermined time. Once cured, the resistive heating system may then be coupled to the particular area of the aircraft for which the resistive heating system is designed. In various embodiments, the conductive wire leads are then coupled to a controller and/or power source controlled by a controller and operated by the controller.

In various embodiments, a resistive heating system is produced by manufacturing a CNT yarn in a length suitable for a particular application, such as flexible electronics. In various embodiments, conductive wire leads are secured to both ends of the CNT yarn. In various embodiments, the conductive wire leads are secured to both ends of the CNT yarn via a coupling device, such as a butt splice, spade connection, or crimp connection, among others. In various embodiments, the CNT yarn and a portion of the conductive wire leads are then coated in an uncured silicone gum, i.e., a vinyl material including silicone polymers. In various embodiments, the coating of uncured silicone gum may be applied to the CNT yarn via dip coating, spray coating, spin coating, or chemical vapor deposition, among others. In various embodiments, the resistive heating system is then cured. In various embodiments, the curing may be via vulcanization. In that regard, the resistive heating system may be positioned in an autoclave to be cured. The curing may be performed at a predetermined pressure, under a predetermined vacuum, at a predetermined temperature, for a predetermined time. Once cured, the resistive heating system may then be coupled to the particular area of the aircraft for which the resistive heating system is designed. In various embodiments, the conductive wire leads are then coupled to a controller and/or power source controlled by a controller and operated by the controller. In various embodiment, a silicone gum coated CNT yarn provides insulation from environmental factors affecting the CNT yarn's properties. In various embodiments, the silicone gum coating also acts as mechanical reinforcement and enhance the flexibility without creating strains that affects the properties of the CNT yarn. In various embodiments, a resistive heating system that uses silicone gum coated CNT yarn may be used in instances where resistive heating system that use silicone sheet covered CNT yarns are not viable.

As stated previously, the resistive heating systems may be utilized in supercapacitors, flexible electronics, energy storage devices, artificial muscles, aircraft structures, such as deicing systems, environmental warming, as well as other aircraft heating systems, portable water systems (PWS), and vacuum waste systems (VWS). While the following is directed to deicing system, the illustrative embodiments are not limited to only these applications. In that regard the deicing application described below are only utilized as one example.

An aircraft is pushed through the air to generate lift. Aircraft wings may generate most of the lift associated with holding the aircraft in the air. Accordingly, aircraft wings may be shaped as an airfoil. An airfoil may be a cross-sectional shape of an object whose motion through a fluid is capable of generating lift. The air may resist aircraft motion in the form of aerodynamic drag. Turbine engines may provide thrust to overcome drag and push the aircraft forward. A wing's aerodynamic efficiency may be expressed as a lift-to-drag ratio. A high lift-to-drag ratio may be associated with a smaller thrust to propel the wings through the air at sufficient lift, and vice versa.

Ice formation on a leading edge of a wing, as well as other aircraft structures, such as vertical stabilizers or horizontal stabilizers, among others, may disrupt or destroy the smooth flow of air along the aircraft structures, increasing drag while decreasing the ability of the wing to create lift. Accordingly, ice formation on the leading edge of an aircraft structures may prevent an aircraft from taking off, or worse, may interfere with flight.

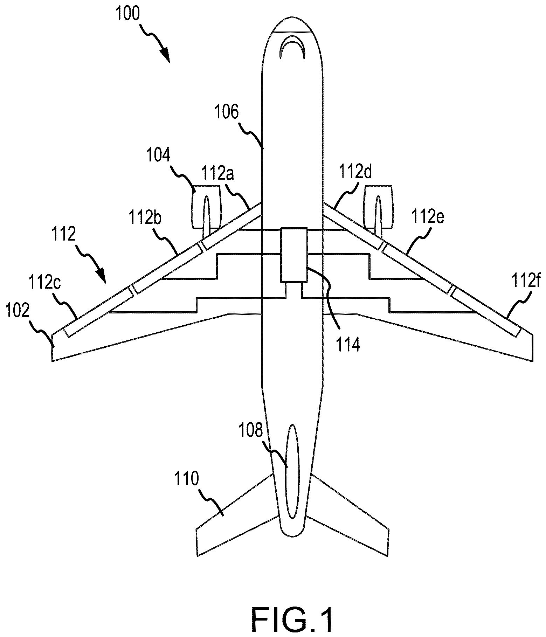

Referring now to FIG. 1, a top view of an aircraft 100 is illustrated, in accordance with various embodiments. Aircraft 100 includes wings 102, engines 104, a fuselage 106, a vertical stabilizer 108, and horizontal stabilizers 110, among other control surfaces. Aircraft 100 further includes a plurality of deicing assemblies 112 including deicing assemblies 112a, 112b, 112c on a first wing 102 and deicing assemblies 112d, 112e, 112f on a second wing 102. In various embodiments, deicing assemblies 112 may be located on a leading edge of each wing 102 (as illustrated in FIG. 1) to prevent the buildup of ice on the leading edge of each wing 102. In various embodiments, deicing assemblies 112a, 112d may be located at a proximal end of wings 102 adjacent the fuselage 106, deicing assemblies 112c, 112f may be located at a distal end of wings 102, and deicing assemblies 112b, 112e may be located between deicing assemblies 112a, 112d and deicing assemblies 112c, 112f, respectively.

In various embodiments, deicing assemblies 112 may be located on an external surface of wings 102. In various embodiments, deicing assemblies 112 may be located on an internal surface of wings 102. In various embodiments, deicing assemblies 112 may be, additionally or in the alternative, coupled to an external surface and/or an internal surface of a leading edge of engines 104, fuselage 106, vertical stabilizer 108, horizontal stabilizers 110, and/or other control surfaces of aircraft 100. For simplicity and ease of discussion, deicing assemblies 112 will be described as being coupled to the leading edge of wings 102, though other locations are considered.

In various embodiments, each of the deicing assemblies 112a-112f may be individually coupled to a controller 114. In various embodiments, controller 114 may comprise one or more processors configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. In various embodiments, controller 114 may further comprise memory to store data, executable instructions, system program instructions, and/or controller instructions to implement the control logic of controller 114.

System program instructions and/or controller instructions may be loaded onto a non-transitory, tangible computer-readable medium having instructions stored thereon that, in response to execution by the controller 114, cause the controller 114 to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

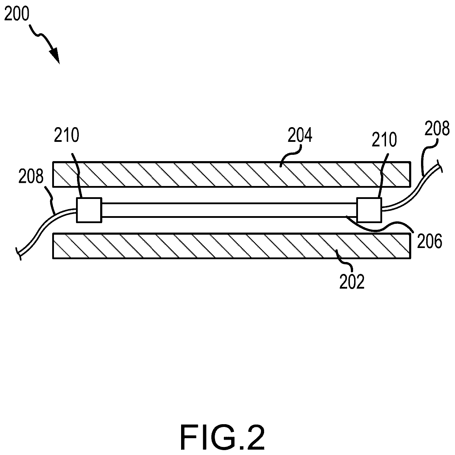

Referring to FIG. 2, in accordance with various embodiments, a cross sectional view of a resistive heating system with a carbon nanotube consolidated in silicon rubber, is illustrated. In various embodiments, the resistive heating system 200 includes a first uncured silicone rubber sheet 202 and a second uncured silicone rubber sheet 204. In various embodiments, the first uncured silicone rubber sheet 202 and the second uncured silicone rubber sheet 204 are both reinforced with fiberglass. In various embodiments, a CNT yarn 206 is embedding in a first side of a first uncured silicone rubber sheet 202. In various embodiments, the CNT yarn 206 may be routed in a desired pattern on the first side of the first uncured silicone rubber sheet 202. Once embedded, in various embodiments, conductive wire leads 208 are secured to both ends of the CNT yarn 206. In various embodiments, the conductive wire leads 208 are secured to both ends of the CNT yarn 206 via a coupling device 210, such as a butt splice, spade connection, or crimp connection, among others. In various embodiments, the conductive wire leads 208 are then partially embedded within the first side of the first uncured silicone rubber sheet 202, with the conductive wire leads 208 exiting the first uncured silicone rubber sheet for connection to a controller and/or power source controlled by a controller. In various embodiments, a first side of a second uncured silicone rubber sheet 204 is then coupled to the first side of the first uncured silicone rubber sheet 202 such that the CNT yarn 206 and a portion of the conductive wire leads 208 are sandwiched between the first uncured silicone rubber sheet 202 and the second uncured silicone rubber sheet 204.

In various embodiments, the resistive heating system 200 is then cured. In various embodiments, the curing may be via vulcanization. In that regard, the resistive heating system 200 may be positioned in an autoclave to be cured. The curing may be performed at a predetermined pressure, under a predetermined vacuum, at a predetermined temperature, for a predetermined time. In various embodiments, the predetermined pressure may be between 3.2 bars and 4.2 bars. In various embodiments, the predetermined pressure may be between 3.5 bars and 3.9 bars. In various embodiments, the predetermined pressure may be 3.7 bars. In various embodiments, the predetermined vacuum may be between 80 KPa and 90 KPa. In various embodiments, the predetermined vacuum may be between 83 KPa and 87 KPa. In various embodiments, the predetermined vacuum may be 85 KPa. In various embodiments, the predetermined temperature may be between 284°F (140°C) and 320°F (160°C). In various embodiments, the predetermined temperature may be between 293°F (145°C) and 311°F (155°C). In various embodiments, the predetermined temperature may be 302°F (150°C). In various embodiments, the predetermined time may be between 2 hours and 3 hours. In various embodiments, the predetermined time may be between 2.25 hours and 2.75 hours. In various embodiments, the predetermined time may be 2.5 hours. Once cured, the resistive heating system 200 may then be coupled to the particular area of the aircraft for which the resistive heating system is designed. In various embodiments, the conductive wire leads 208 are then coupled to a controller and/or power source controlled by a controller and operated by the controller.

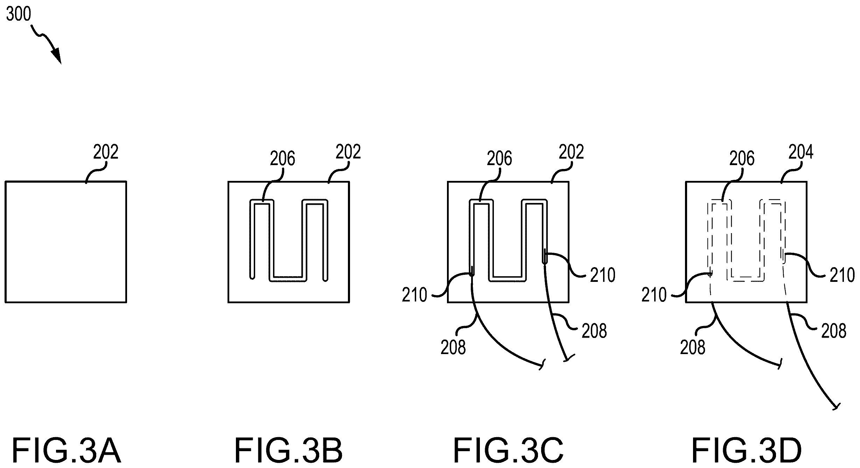

Referring to FIGS. 3A, 3B, 3C, and 3D, in accordance with various embodiments, a top view of a resistive heating system with a carbon nanotube consolidated in silicon rubber, is illustrated. In various embodiments, the resistive heating system 300 is similar to the resistive heating system 200 of FIG. 2. In that regard, in various embodiments, as illustrated in FIG. 3A, a first uncured silicone rubber sheet 202 is positioned on a surface. In various embodiments, as is illustrated in FIG. 3B, a CNT yarn 206 is embedding in a first side of a first uncured silicone rubber sheet 202. In various embodiments, the CNT yarn 206 may be routed in desired pattern on the first side of the first uncured silicone rubber sheet 202. Once embedded, in various embodiments, as illustrated in FIG. 3C, conductive wire leads 208 are secured to both ends of the CNT yarn 206. In various embodiments, the conductive wire leads 208 are secured to both ends of the CNT yarn 206 via a coupling device 210, such as a butt splice, spade connection, or crimp connection, among others. In various embodiments, the conductive wire leads 208 are then partially embedded within the first side of the first uncured silicone rubber sheet 202, with the conductive wire leads 208 exiting the first uncured silicone rubber sheet for connection to a controller and/or power source controlled by a controller. In various embodiments, as illustrated in FIG. 3D, a first side of a second uncured silicone rubber sheet 204 is then coupled to the first side of the first uncured silicone rubber sheet 202 such that the CNT yarn 206 and a portion of the conductive wire leads 208 are sandwiched between the first uncured silicone rubber sheet 202 and the second uncured silicone rubber sheet 204.

In various embodiments, the resistive heating system 200 is then cured. In various embodiments, the curing may be via vulcanization. In that regard, the resistive heating system 200 may be positioned in an autoclave to be cured. The curing may be performed at a predetermined pressure, under a predetermined vacuum, at a predetermined temperature, for a predetermined time. In various embodiments, the predetermined pressure may be between 3.2 bars and 4.2 bars. In various embodiments, the predetermined pressure may be between 3.5 bars and 3.9 bars. In various embodiments, the predetermined pressure may be 3.7 bars. In various embodiments, the predetermined vacuum may be between 80 KPa and 90 KPa. In various embodiments, the predetermined vacuum may be between 83 KPa and 87 KPa. In various embodiments, the predetermined vacuum may be 85 KPa. In various embodiments, the predetermined temperature may be between 284°F (140°C) and 320°F (160°C). In various embodiments, the predetermined temperature may be between 293°F (145°C) and 311°F (155°C). In various embodiments, the predetermined temperature may be 302°F (150°C). In various embodiments, the predetermined time may be between 2 hours and 3 hours. In various embodiments, the predetermined time may be between 2.25 hours and 2.75 hours. In various embodiments, the predetermined time may be 2.5 hours. Once cured, the resistive heating system 200 may then be coupled to the particular area of the aircraft that the resistive heating system is designed for. In various embodiments, the conductive wire leads 208 are then coupled to a controller and/or power source controlled by a controller and operated by the controller.

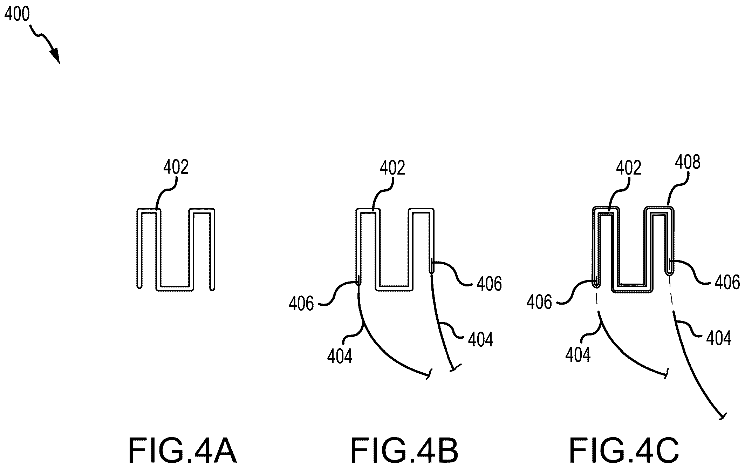

Referring to FIGS. 4A, 4B, and 4C, in accordance with various embodiments, a top view of a resistive heating system with a carbon nanotube consolidated in silicone gum, is illustrated. In various embodiment, as illustrated in FIG. 4A, the resistive heating system 400 includes a CNT yarn 402 in a length required for a particular application, such as flexible electronics. In various embodiments, as illustrated in FIG. 4B, conductive wire leads 404 are secured to both ends of the CNT yarn. In various embodiments, the conductive wire leads 404 are secured to both ends of the CNT yarn via a coupling device 406, such as a butt splice, spade connection, or crimp connection, among others. In various embodiments, as illustrated in FIG. 4B, the CNT yarn 402 and a portion of the conductive wire leads 404 are then coated in an uncured silicone gum 408. In various embodiments, the coating of the uncured silicone gum 408 may be applied to the CNT yarn 402 via dip coating, spray coating, spin coating, or chemical vapor deposition, among others. In various embodiments, the resistive heating system 400 is then cured. In various embodiments, the curing may be via vulcanization. In that regard, the resistive heating system 400 may be positioned in an autoclave to be cured. The curing may be performed at a predetermined pressure, under a predetermined vacuum, at a predetermined temperature, for a predetermined time. In various embodiments, the predetermined pressure may be between 3.2 bars and 4.2 bars. In various embodiments, the predetermined pressure may be between 3.5 bars and 3.9 bars. In various embodiments, the predetermined pressure may be 3.7 bars. In various embodiments, the predetermined vacuum may be between 80 KPa and 90 KPa. In various embodiments, the predetermined vacuum may be between 83 KPa and 87 KPa. In various embodiments, the predetermined vacuum may be 85 KPa. In various embodiments, the predetermined temperature may be between 284°F (140°C) and 320°F (160°C). In various embodiments, the predetermined temperature may be between 293°F (145°C) and 311°F (155°C). In various embodiments, the predetermined temperature may be 302°F (150°C). In various embodiments, the predetermined time may be between 2 hours and 3 hours. In various embodiments, the predetermined time may be between 2.25 hours and 2.75 hours. In various embodiments, the predetermined time may be 2.5 hours. Once cured, the resistive heating system 400 may then be coupled to the particular area of the aircraft that the resistive heating system 400 is designed for. In various embodiments, the conductive wire leads 404 are then coupled to a controller and/or power source controlled by a controller and operated by the controller. In various embodiment, the silicone gum coated CNT yarn provides insulation from environmental factors affecting the CNT yarn's properties. In various embodiments, the silicone gum coating also acts as mechanical reinforcement and enhance the flexibility without creating strains that affects the properties of the CNT yarn. In various embodiments, a resistive heating system that uses silicone gum coated CNT yarn may be used in instances where resistive heating system that use silicone sheet covered CNT yarns are not viable.

Accordingly, in various embodiments, the CNT yarn embedded in a silicone rubber sheet or a silicone gum in an elastomeric resistive heating system that is more conformable and/or flexible than metal. In various embodiments, the uncured silicone rubber sheet provides and adhesion property making routing of the CNT yarn easier in a desired pattern. In various embodiments, both the silicone rubber sheet and the silicone gum are resistant to chemicals and fluids and thus, provide proper encapsulation to the CNT yarn and prevents property degradation by not exposing the CNT yarn to external affecting factors. In that regard, in various embodiments, silicone is electrical insulator which tends to prevent short circuit and ensures safety. In various embodiments, the silicone rubber sheet and the silicone gum are also thermally stable at higher temperatures. In various embodiments, the heat transfer properties of silicone are better due to enhanced thermal conductivity making it suitable for heating applications.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A resistive heating system, comprising:
a first silicone rubber sheet (202);
a carbon nanotube "CNT" yarn (206), wherein the CNT yarn is configured to be embedded in a first side of the first silicone rubber sheet;
a set of conductive wire leads (208), wherein each of the set of conductive wire leads is configured to be coupled to opposite ends of the CNT yarn; and
a second silicone rubber sheet (204), wherein a first side of the second silicone rubber sheet is configured to be coupled to the first side of the first silicone rubber sheet thereby embedding the CNT yarn and at least a portion of the conductive wire leads between the first silicone rubber sheet and the second silicone rubber sheet.

2. The resistive heating system of claim 1, wherein both the first silicone rubber sheet (202) and the second silicone rubber sheet (204) are reinforced with fiberglass.

3. The resistive heating system of claim 1 or 2, wherein each of the set of conductive wire leads (208) is configured to be coupled to the opposite ends of the CNT yarn via a coupling device.

4. The resistive heating system of claim 3, wherein the coupling device is at least one of a butt splice, spade connection, or crimp connection.

5. The resistive heating system of any preceding claim, wherein, responsive to the first side of the second silicone rubber sheet being coupled to the first side of the first silicone rubber sheet thereby embedding the CNT yarn and at least a portion of the conductive wire leads between the first silicone rubber sheet and the second silicone rubber sheet, the resistive heating system is cured.

6. The resistive heating system of claim 5, wherein the curing comprises:
positioning the resistive heating system in an autoclave at a predetermined pressure, under a predetermined vacuum, at a predetermined temperature, for a predetermined time.

7. The resistive heating system of claim 6, wherein the predetermined pressure is between 3.2 bars and 4.2 bars.

8. The resistive heating system of claim 6, wherein the predetermined vacuum is between 80 KPa and 90 KPa.

9. The resistive heating system of claim 6, wherein the predetermined temperature is between 284°F (140°C) and 320°F (160°C).

10. The resistive heating system of claim 6, wherein the predetermined time is between 2 hours and 3 hours.

11. A resistive heating system, comprising:
a carbon nanotube "CNT" yarn (206);
a set of conductive wire leads (208) , wherein each of the set of conductive wire leads is configured to be coupled to opposite ends of the CNT yarn; and
a silicone gum (408), wherein the CNT yarn and at least a portion of the conductive wire leads are coated with the silicone gum.

12. The resistive heating system of claim 11, wherein the silicone gum is applied to the CNT yarn and at least the portion of the conductive wire leads via at least one of dip coating, spray coating, spin coating, or chemical vapor deposition, or wherein each of the set of conductive wire leads is configured to be coupled to the opposite ends of the CNT yarn via a coupling device, and optionally wherein the coupling device is at least one of a butt splice, spade connection, or crimp connection.

13. The resistive heating system of claim 11, wherein, responsive to the CNT yarn and at least the portion of the conductive wire leads being coated with the silicone gum, the resistive heating system is cured.

14. The resistive heating system of claim 13, wherein the curing comprises:
positioning the resistive heating system in an autoclave at a predetermined pressure, under a predetermined vacuum, at a predetermined temperature, for a predetermined time.

15. The resistive heating system of claim 14, wherein the predetermined pressure is between 3.2 bars and 4.2 bars, or wherein the predetermined vacuum is between 80 KPa and 90 KPa, or wherein the predetermined temperature is between 284°F (140°C) and 320°F (160°C), or wherein the predetermined time is between 2 hours and 3 hours.
